# EUROPÄISCHE PATENTSCHRIFT

(11) **EP 0 605 811 B1**
(45) Veröffentlichungstag und Bekanntmachung des Hinweises auf die Patenterteilung: **27.08.1997**
(21) Anmeldenummer: 93119964.0
(22) Anmeldetag: 10.12.1993
(51) Int. Cl.: G01B 7/16, G01B 7/24, E02D 5/80

(54) **Überwachungsvorrichtung für Bauelemente, insbesondere für Zugglieder von Erd- bzw. Felsankern, Druckglieder von Pfählen, Spannglieder für Spannbetonbauwerke und Brückenseilen**
Monitoring device for structural elements in particular for tensioning devices in earth or rock anchors, pressure devices for piles, tensioning devices for prestressed concrete structures and bridge cables
Appareil de surveillance pour éléments structuraux en particulier pour les tirants de boulons d'ancrage dans la terre ou de roche, éléments de pression pour pieux, éléments de précontrainte pour structures en béton précontraint et pour tirants de pont

(30) Priorität: 23.12.1992 DE 4243878
(43) Veröffentlichungstag der Anmeldung: 13.07.1994
(73) Patentinhaber: Schütt, Karl, Dr.-Ing., 40764 Langenfeld (DE)
(72) Erfinder: Schütt, Karl, Dr. Ing., D-40764 Langenfeld (DE); Klinger, Martin, Dr. Ing., D-31162 Bad Salzdetfurth (DE); Hinken, J. H., Univ.-Prof. Dr. Ing., D-31188 Holle (DE); Tintchev, Savtcho Stefanow, Dr., D-31162 Bad Salzdetfurth (DE)
(74) Vertreter: Eder, Eugen, Dipl.-Ing.

(56) Entgegenhaltungen:
- DE-A- 1 484 533
- DE-A- 2 437 740
- DE-A- 2 920 886
- DE-A- 3 636 322
- DE-A- 4 134 787
- FR-A- 2 193 475
- NL-A- 6 504 541
- US-A- 4 289 024
- PATENT ABSTRACTS OF JAPAN vol. 13, no. 358 (P-916) 10. August 1989 & JP-A-01 119 756 (OTAKA MASAHIRO) 11. Mai 1989

## Beschreibung

Die Erfindung betrifft eine Überwachungsvorrichtung für Bauelemente, wie Zugglieder von Erd- bzw. Felsankern, Druckglieder von Pfählen, Spannglieder für Spannbetonbauwerke und Brückenseilen nach dem Oberbegriff des Ansprüchs 1.

Erd- und Felsanker bestehen in der Regel aus einem Zugglied aus Stahl, das an seinem luftseitigen Ende mit der zu befestigenden Konstruktion und an seinem grundseitigen Ende über die Verankerungsstrecke mit dem Boden bzw. Fels verbunden ist. Das Zugglied ist entweder aus einem einzigen Zugelement in Form eines Stabes bzw. Seiles oder, insbesondere bei Ankern höherer Tragkraft, aus einer größeren Anzahl von parallelen Zugelementen aufgebaut. Der Anker ist nach seinem Einbau in den Baugrund unzugänglich, z.B. vom Erdreich oder Fels umgeben.

Das Material des Zuggliedes ist meistens Stahl und häufig, insbesondere bei vorgespannten Ankern, ein hochfester sogenannter Spannstahl, der vergleichsweise empfindlich ist. Der Stahl darf nicht versagen, damit die Funktionsfähigkeit des Ankers erhalten bleibt. Eine Schwächung oder sogar das Reißen von Zugelementen aus Stahl, insbesondere Spannstahl, kann, z.B. durch Korrosion, insbesondere durch die bei vorgespannten Zugelementen mögliche Spannungs-Rißkorrosion erfolgen.

Neben der Korrosion besteht eine weitere Ursache für die Abnahme der Vorspannkraft eines Ankers besteht in der Spannungs-Relaxation der vorgespannten Zugelemente.

Erd- und Felsanker müssen dauerhaft ihre Funktion erfüllen. Insbesondere bei sogenannten Langzeit- bzw. Dauerankern wird daher angestrebt und häufig verlangt, daß Ihre Funktionsfähigkeit dauernd oder in regelmäßigen Abständen überwacht werden kann, um ein Sicherheitsrisiko rechtzeitig zu erkennen.

Die Überwachung der Zugelemente selbst ist nur sehr schwierig bzw. fast gar nicht möglich, weil die Anker praktisch über ihre gesamte Länge, die häufig beträchtlich sein kann, von der zu befestigenden Konstruktion sowie vom Erdreich oder Fels umgeben sind, so daß keine visuelle Überprüfung oder Überprüfung durch seitlich anzusetzende Prüfgeräte über die Länge des Zuggliedes möglich ist. In der Regel ist die einzige zugängliche Stelle eines Ankers dasjenige Ende, an dem die luftseitige Verankerung erfolgt.

Ein bekannte Möglichkeit zur Überprüfung eines Ankers besteht darin, an der zugänglichen, luftseitigen Verankerung die Ankerkraft zu messen. Insbesondere Daueranker sind an diesem zugänglichen Ende häufig so ausgerüstet, daß durch späteres Ansetzen einer Spannpresse die Verankerung von ihrer Unterlage abgehoben werden kann, wobei die Abhebekraft, die der vorliegenden Ankerkraft entspricht, gemessen wird.

Als weitere Möglichkeit der Kraftkontrolle wird hin und wieder angewendet, die zugängliche Verankerung mit einem Kraftmeßelement, Kraftmeßdose auf z.B. elektrischer, mechanischer oder hydraulischer Basis, auszurüsten, um so die Ankerkraft ständig oder bei Bedarf festzustellen.

Diese Kraftkontrollen sind vergleichsweise aufwendig und teuer. Wird ein Kraftabfall registriert, so ist es meistens nicht einfach zu entscheiden, ob der Kraftabfall durch Versagen oder Nachgeben des Verbundes zwischen dem Anker und dem umgebenden Baugrund bzw. Fels oder durch Versagen einzelner Zugelemente des Ankers verursacht ist.

Auch ist es durchaus möglich, daß keine wesentliche Ankerkraftänderung registriert wird, obwohl einige Zugelemente des Ankers gerissen oder in ihrem Querschnitt durch Korrosion geschwächt sind. In vielen Fällen übernehmen nämlich die anderen, noch intakten Zugelemente des Ankers die Kraftanteile der versagenden Zugelemente. Die intakten Zugelemente werden in diesem Fall höher beansprucht, mit der Folge, daß auch sie stärker der Gefahr des Versagens ausgesetzt sind.

Des weiteren ist beispielsweise aus der DE 41 34 787 A1 oder der EP 0 264 622 A1 ein Verfahren zur Überwachung von Bauteilen bekannt, bei dem Lichtwellenleiter-Sensoren parallel zu den Zugelementen mit in das Zugelement umgebende Hüllrohr fest eingebaut und Dämpfungsänderungen des Sensors gemessen werden.

Insbesondere nach der EP 0 264 622 A1, von welcher die Erfindung aüsgeht, werden Lichtwellenleiter vor ihrer festen Verbindung mit dem Baüteil außerdem nach mechanisch vorgespannt. Damit ist ein Austausch eines defekten sensors nicht möglich und die Meßmöglichkeiten sind insgesamt begrenzt.

Ein aus der DE 36 00 034 A1 bekanntes, vergleichbares Verfahren verwendet anstelle der Lichtwellenleiter-Sensoren elektrisch leitende Drähte, die über die gesamte Länge des zu überwachenden Bauteils fest mit diesem verbunden sind, wobei der Widerstand oder die Kapazität der Drähte gemessen wird.

Die Sensoren sollen dabei Dehnungsänderungen, beispielsweise der Verbundstrecke des Ankers anzeigen, wobei diese Dehnungsänderungen durch den Ausfall einzelner oder aller Zugelemente des Ankers bedingt sein können. Eine genaue Aussage über die Ursache der Dehnungsänderung ist aber mit dieser Methode nicht möglich. Insbesondere kann nicht erkannt werden, ob einzelne oder alle Zugelemente korrodiert oder gar gerissen sind.

Fast alle bisher zur Überwachung verwendeten Sensoren, wie z.B. Kraftmeßgeber oder Lichtwellenleitersensoren, haben den Nachteil, fest mit dem Anker verbunden zu sein. Die korrekte Funktion der Überwachungselemente selbst kann somit später nicht mehr überprüft werden. Insbesondere kann nicht mehr festgestellt werden, ob Veränderungen des Meßsignals aus der Veränderung des Zuggliedes oder aus Veränderung des Sensors, z.B. infolge Langzeitveränderungen der Kalibrierkurve, herrühren.

Der Erfindung liegt die Aufgabe zugrunde, eine Überwachungsvorrichtung für Bauelemente, wie Zugglieder von Erd- oder Felsankern, Druckglieder von Pfählen oder Spanngliedern für Spannbetonbauwerke zu schaffen, die so ausgebildet ist, daß die Schwächung oder das Versagen eines Bauelements durch Sensoren direkt erkannt wird, selbst dann, wenn wesentliche Teile des Bauelements nicht von außen zugänglich sind, wobei jederzeit eine Prüfung der Funktionsfähigkeit des Sensors möglich sein soll.

Die Erfindung löst diese Aufgabe mit den Merkmalen des Patentanspruchs 1.

Dadurch, daß ein in einem Sensorkanal des zu überwachenden Bauelements vorgesehener, den metallischen Zug-, Druck- bzw. Spanngliedern der Bauelemente zugeordneter beweglicher und/oder lösbarer, Sensor vorhanden ist, kann die Korrosion, Überdehnung bzw. Reißen oder eine Spannungs-Relaxation der einzelnen Zugglieder bzw. Zugstäbe oder Seilen über die ganze Länge derselben festgestellt werden.

Der Sensor kann im Sensorkanal ständig verbleiben oder nur zur Überprüfung in denselben einsetz- und herausnehmbar ausgebildet sein. Er ist somit auf seine Funktion überprüfbar und kann gegen einen neuen intakten oder besseren Sensor ausgetauscht werden können. Auf diese Weise wird die Überwachungsmöglichkeit auch über lange Zeiträume sichergestellt.

Nach einer anderen Ausführungsform kann für den Sensor eine Bewegungsvorrichtung vorhanden sein, die z.B. durch Fernwirkung betätigt wird.

Hierdurch ist auf einfache Weise die Bestimmung des Ortes der Schwächung oder des Versagens über die gesamte Länge des zu überwachenden Baüelements möglich.

Bei einer bevorzugten Ausführungsform der Erfindung wird ein höchstempfindlicher Magnetfeldsensor verwendet, der die Beeinflussung eines Magnetfeldes durch das zu überwachende Baüelement erfaßt.

Dabei kann zur Erzeugung des Magnetfelds an wenigstens eine Sendespule vorgesehen sein, die vorzugsweise an einem Ende eines zu überwachenden Baüelements vorgesehen ist.

Als Sensor wird bei der bevorzugten Ausführungsform der Erfindung ein hochempfindlicher Magnetfeldsensor in Form eines supraleitenden Quanteninterferometers (SQUID) verwendet.

Die Signalauswertung erfolgt vorzugsweise durch Anwendung der Lockin-Technik oder durch Korrelation des jeweiligen Sensorsignals mit einem dem Wechsel- oder Impulsmagnetfeld entsprechenden Referenzsignal. Mit dieser Technik kann neben der Aussage über das Vorliegen einer Störung auch der Ort der Störung durch Auswertung der Phasenverschiebung zwischen dem Referenzsignal und dem betreffenden Sensorsignal bestimmt werden.

Hierdurch ergibt sich der Vorteil, daß keine zusätzliche Wegmessung mehr erforderlich ist.

Dabei kann diese Technik zur Ermittlung des Vorhandenseins und des Ortes einer Störung des zu überwachenden Bauelements selbstverständlich auch unabhängig von der Anordnung des zumindest einen Sensors in einem Sensorkanal verwendet werden, indem beispielsweise der Sensor an einem von außen zugänglichen ggf. ummantelten Bauelement angeordnet oder an dessen Außenseite entlang geführt wird.

Weitere Ausgestaltungen der Erfindung ergeben sich aus den Unteransprüchen.

Die Erfindung wird nachfolgend anhand von in der Zeichnung dargestellten Ausführungsbeispielen näher erläutert. In der Zeichnung zeigen:
- Fig. 1: eine schematische Schnittansicht eines Erdankers mit Überwachungsvorrichtung;
- Fig. 2: einen Schnitt nach der Linie II-II in Fig. 1;
- Fig. 3: einen Querschnitt wie in Fig. 2 mit geänderter Lage des Überwachungskanals;
- Fig. 4: einen Teilschnitt vom grundseitigen Ende eines Erdankers mit ein Magnetfeld für den Sensor erzeugender Spule;
- Fig. 5: einen Teilschnitt wie in Fig. 4 mit mehreren Magnetfelder erzeugenden Spulen für einen oder mehrere Sensoren;
- Fig. 6: einen Schnitt eines geänderten Erdankers;
- Fig. 7: einen Schnitt eines Erdankers mit einer geänderten Bewegungsvorrichtung für einen Sensor und
- Fig. 8: einen Schnitt nach der Linie VIII-VIII in Fig. 7.
- Fig. 9: einen Querschnitt durch ein Stahlbeton- bzw. Spannbetontragglied.
- Fig. 10: ein Blockschaltbild einer bevorzugten Möglichkeit zur Signalauswertung.

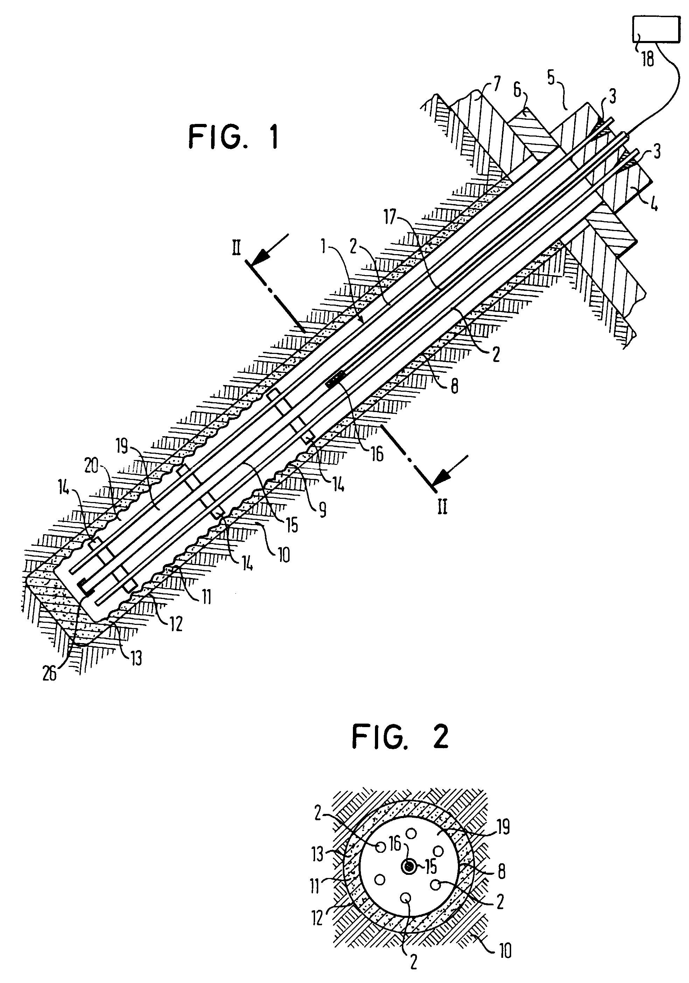

Der Erd- bzw. Felsanker nach Fig. 1 weist wie üblich ein Zugglied 1 aus einem oder mehreren Zugstäben oder Seilen 2 auf. Die luftseitigen Enden der Zugstäbe oder Seile 2 sind z.B. mittels Klemmkeilen 3 im Ankerkopf 4 der luftseitigen Verankerung 5 befestigt. Der Ankerkopf 4 stützt sich auf die Ankerplatte 6 ab, die auf einem z.B. zu verankernden Bauteil 7 aufliegt, welches sich auf der Erd- oder Felsoberseite abstützt.

Das Zugglied 1 kann über den vorderen Teil seiner Länge von einem glatten Hüllrohr 8 und über den unteren Teil von einem gerippten Hüllrohr 9, in dessen Bereich die Ankerkraft über Verbund in den umgebenden Baugrund oder Fels 10 übertragen wird, umgeben sein. Das Zugglied 1 mit Hüllrohr 8 und 9 ist in einem Bohrloch 11 angeordnet. Der Ringraum zwischen Hüllrohr 8, 9 und Bohrlochwandung 12 ist mit erhärtbarem Verpreßmörtel 13 ausgefüllt.

Die einzelnen Ankerstäbe oder -seile 2 können durch Distanzhalter 14 geordnet sein.

Annähernd parallel zu den Ankerstäben oder -seilen 2 verläuft ein Sensorkanal 15. Der Sensorkanal 15 kann bereits bei Einbau des Ankers ausgebildet werden. Er kann aber auch nachträglich erstellt werden. Dieser ist von einer Bohrung oder einem Rohr gebildet. Das Rohr ist am unteren Ende durch einen Stopfen 26 abgeschlossen. Sein luftseitiges Ende ist durch den Ankerkopf nach außen geführt. Innerhalb des Sensorkanals 15 ist ein Sensor 16 angeordnet. Dieser Sensor ist vorzugsweise ein höchst empfindlicher Magnetfeldsensor, ein sogenannter SQUID (Supraleitender Quanten-Interferenz-Detektor). Ein solcher Sensor 16 kann in Form eines Sensorkopfes, bestehend aus Meßkopf mit Feldspule und Pick-up-Spule ausgebildet sein. Der Sensor 16 ist im Sensorkanal 15 verschiebbar, z.B. über die ganze Länge oder eine Teillänge des Ankerzuggliedes. Die Bewegung der Sensoren 16 erfolgt über eine Bewegungsvorrichtung 17. Diese kann zugleich auch eine Sensorübertragungsleitung bilden. Sie ist mit einer luftseitigen, außerhalb des Erdankers angeordneten Signalverarbeitungseinrichtung 18 verbunden. Der Innenraum 19 des Hüllrohres 8 und 9, in dem die Ankerstäbe bzw. -seile 2 und der Sensorkanal 15 angeordnet sind, ist ebenfalls mit einer erhärtbaren Füllmasse, z.B. Verpreßmörtel, ausgefüllt.

Wie aus Fig. 2 ersichtlich, ist der Sensorkanal 15 im wesentlichen mittig angeordnet und wird von mehreren Ankerstäben bzw. Seilen 2 z.B. kreisförmig umgeben.

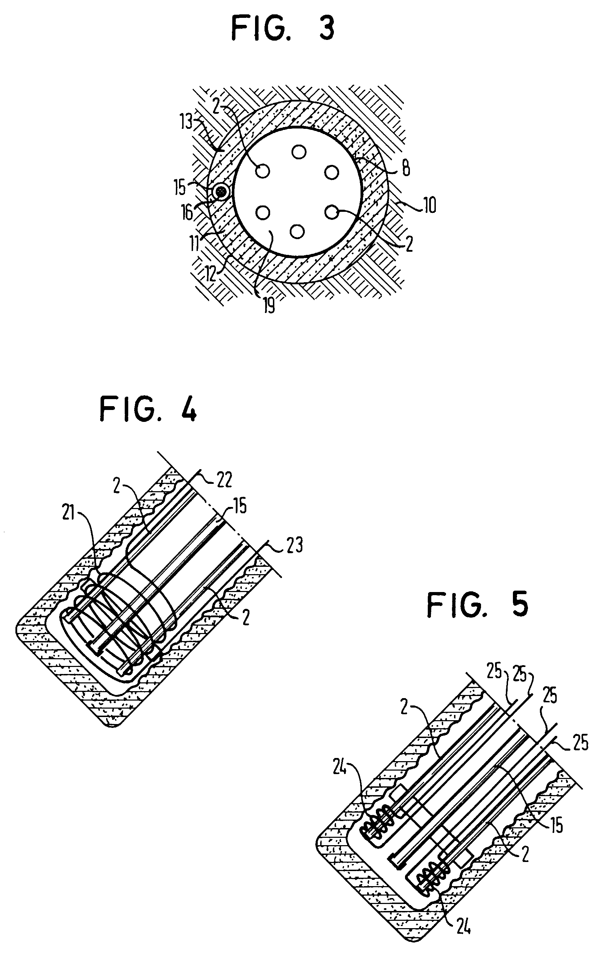

Aus Fig. 3 ist ersichtlich, daß der Sensorkanal 15 mit Sensor 16 auch in dem Ringraum zwischen Hüllrohr 8, 9 und Bohrlochwandung 12 angeordnet sein kann.

Der bei der Ausführungsform nach Fig. 1 verwendete Sensor schließt eine Sendespule zur Erzeugung eines Magnetfeldes mit ein. Wie aus Fig. 4 ersichtlich, ist es auch möglich, zur Erzeugung des notwendigen Magnetfeldes für die Verwendung eines höchstempfindlichen Magnetfeldsensors (SQUID) die Sendespule 21 so anzuordnen, daß sie am Fuß der Ankerstäbe bzw. Litzen 2 diese umschließt. Die elektrischen Zu- bzw. Ableitungen 22, 23 sind über den Ankerkopf 4 nach außen geführt.

Nach Fig. 5 ist es aber auch möglich, jedes grundseitige Ende eines Ankerstabes bzw. -seiles 2 von einer Sendespule 24 umschließen zu lassen, deren Zu- und Ableitungen 25 wieder über den Ankerkopf 4 nach außen geführt sind. Die Sendespulen 24 können dabei in Parallel- oder Reihenschaltung angeordnet sein.

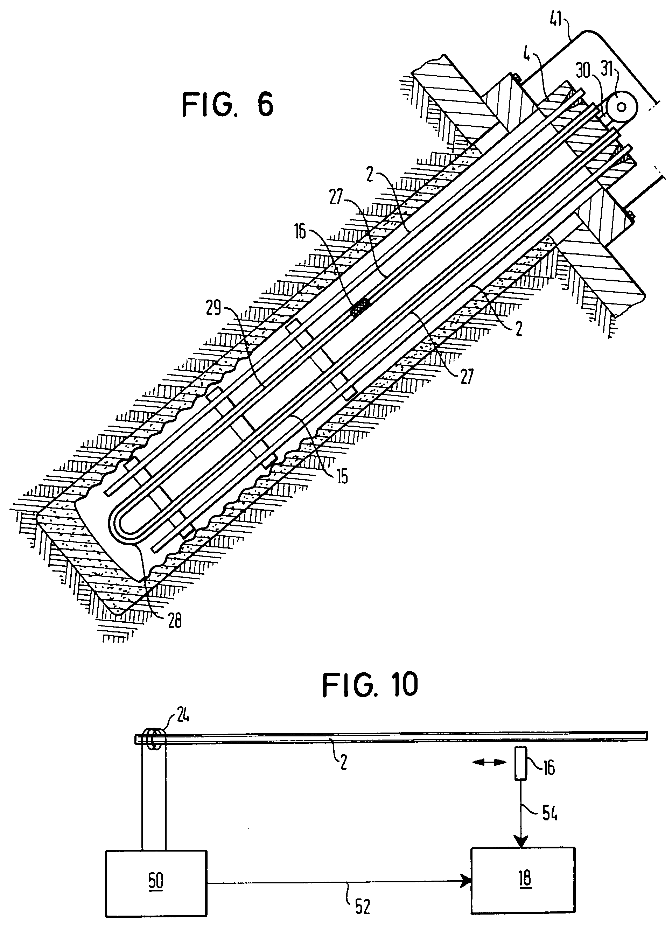

Nach Fig. 6 ist der Sensorkanal 15 U-förmig mit zwei Schenkeln 27 ausgebildet, die unten durch einen Rohrbogen 28 miteinander verbunden sind. Die luftseitigen Enden der Schenkel 27 sind über den Ankerkopf 4 nach außen geführt. Innerhalb des Sensorkanals 15 befindet sich ein endloses Seil 29, das unten im Rohrbogen 28 und luftseitig über die von einem Motor 30 angetriebene Rolle 31 umgelenkt wird. Am Seil 29 ist der Sensor 16 befestigt.

Dieser kann als Sensorkopf ausgeführt sein. Es können auch dem Bohrlochgrund zugekehrte, die Ankerstäbe bzw. -seile 2 umschließende Sendespulen nach Fig. 4 bzw. 5 vorhanden sein.

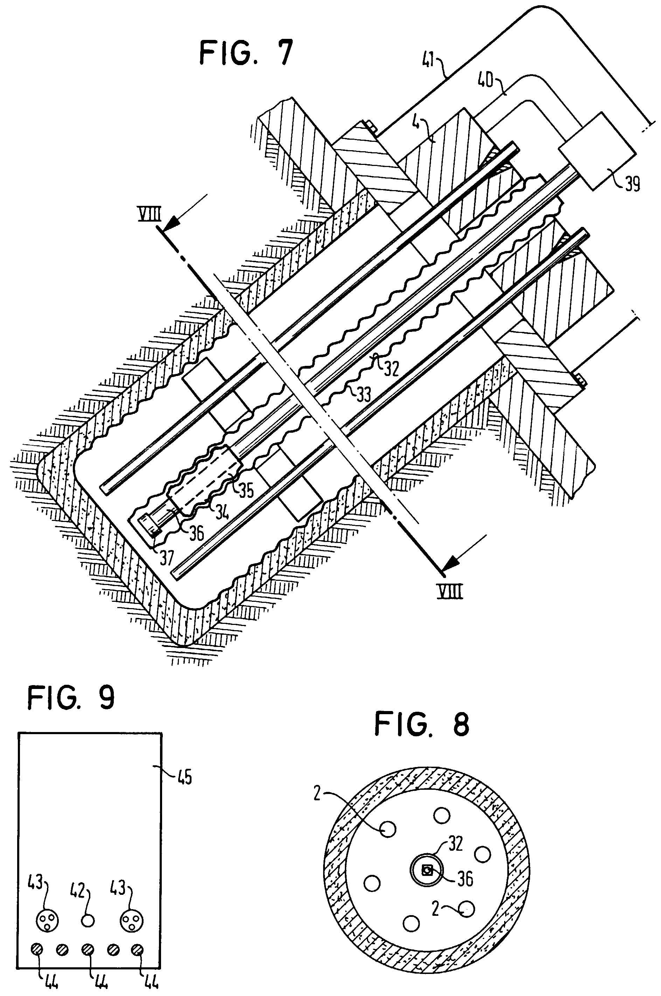

Bei der Ausführung des Erd- oder Felsankers nach Fig. 7 ist die Innenwand 33 des Sensorkanals 32 mit einer wendelförmigen Profilierung versehen, in die das Außengewinde 34 des Sensors 35 eingreift. Der Sensor 35 sitzt verschiebbar, aber mitdrehbar, auf einer Welle 36, die unten einen Endanschlag 37 aufweist. Die Welle 36 wird über einen Motor 39 angetrieben, der über eine Abstützung 40 geschützt innerhalb der Ankerkopfabdeckung 41 befestigt ist. Der Motor 39 kann z.B. mittels nicht dargestellter elektrischer Leitungen fernbedient werden. Am Ankerfuß können wiederum Sendespulen mit Zuleitungen nach Fig. 4 bzw. 5 angeordnet sein.

Aus Fig. 8 ist ersichtlich, daß der Sensorkanal 32 im wesentlichen zentrisch zu den Ankerstäben bzw. -seilen 2 angeordnet ist. Er kann aber auch exzentrisch oder nach Fig. 3, außerhalb des Hüllrohres 8 angeordnet sein.

Wird durch die Bewegung des Sensors 16 das Ankerzugglied 1 teilweise oder über seine ganze Länge abgetastet, so kann hierdurch Korrosion der Ankerstäbe bzw. -seile 2 und/oder Rißbildung derselben erfaßt werden.

Es ist auch möglich, den Sensor 16 im Sensorkanal 15 raumfest anzuordnen, z.B. im Bereich der Verankerungslänge, in der die Kraftübertragung in das Erdreich erfolgt. Hierdurch kann ein Lösen, d.h. Verschieben der Ankerstäbe bzw. -seile 2 gegenüber dem Sensor 16 und damit gegenüber dem umgebenden Erdreich 10 erfaßt werden.

In ähnlicher Weise kann die Überwachungseinrichtung nach der vorliegenden Erfindung auch für Pfähle oder Stützen mit Pfahlstäben oder Seile verwendet werden.

Schließlich ist es auch möglich, die Überwachungseinrichtung nach der vorliegenden Erfindung mit einem Sensorkanal innerhalb eines Spanngliedes oder Seiles bzw. außen am Hüllrohr eines solchen Spanngliedes oder Seiles anzuordnen. Es wäre auch denkbar, solche Sensorkanäle für sich allein in einem Stahlbeton- bzw. Stahlbetonbauwerk vorzusehen. Mit Hilfe solcher Sensorkanäle können dann die in der Nähe liegenden Betonstahlbewehrungen, Spannglieder oder dgl. überprüft werden.

Fig. 9 zeigt im Querschnitt ein Stahlbetontragglied, in dem ein Sensorkanal 42 angeordnet ist, von dem aus die Spannglieder 43 und die Betonstahl-Bewehrungsstäbe 44 überprüft werden können.

Es ist auch möglich, dem Sensor 16 einen Datenspeicher zuzuordnen, der die Sensorsignale speichert. Die Auswertung erfolgt nach Entnahme des Sensors 16 aus dem Sensorkanal. Eine Verbindungsleitung zwischen Sensor 16 und Auswerteeinrichtung 18 kann dann entfallen.

Schließlich können die Sendespulen 21 bzw. 24 statt raumfest auch bewegbar im Sensorkanal 15, z.B. vor einer Überprüfung der Zug-, Druck-, bzw. Spannglieder, vorgesehen sein. Sie können dem Sensor 16 vorauslaufend vorgesehen sein oder sie werden getrennt vom Sensor 16 vor diesem durch den Sensorkanal 15 bewegt. Nach Entnahme der Sendespule kann dann der Sensor 16 in den Sensorkanal 15 eingeführt und in diesem bewegt werden.

Eine bevorzugte Ausführungsform einer Signalauswertung ist in Fig. 10 am Beispiel einer am Ende eines einzelnen Elements 2 eines zu überwachenden Bauelements 1 angeordneten Sendespule 24 dargestellt. Auf die Darstellung für die Signalauswertung unwesentlicher Elemente wurde in Fig. 10 verzichtet.

Die Sendespule 24 wird von einer Sendeeinheit 50 mit einem Wechsel - oder impulsförmigen Strom versorgt, wodurch die Spule 24 ein entsprechendes Wechsel- oder Impulsmagnetfeld erzeugt.

Gleichzeitig führt die Sendeeinheit 50 der Auswerteeinrichtung 18 ein dem Wechsel- oder impulsförmigen Strom bzw. Magnetfeld entsprechendes Referenzsignal 52 zu, so daß die Auswerteeinrichtung 18 den Informationsgehalt dieses Signals zur Verarbeitung und Auswertung des entsprechenden Sensorsignals 54 verwenden kann.

Als magnetischer Sensor wird vorzugsweise eine Induktionsspule oder ein hochempfindliches supraleitendes Quanteninterferometer (SQUID) verwendet, das, wie in Fig. 10 dargestellt, parallel zur Längsachse des zu überwachenden Bauelements verschiebbar angeordnet ist. Der Sensor kann insbesondere so ausgebildet sein, daß die radiale oder axiale Komponente des Magnetfeldes oder deren Gradienten gemessen werden.

Zur Signalauswertung bietet sich insbesondere die Verwendung der Lockin-Technik (phasenstarres Filter) oder die Korrelation der Signale 52 und 54 an. In beiden Fällen kann aus der Phaseninformation der beiden Signale der Abstand zwischen dem Sensor 16 und der Sendespule 24 und damit bei bekannter Lage der Sendespule 24 der jeweilige Ort des Sensors 16 ermittelt werden.

Zur Korrelation der Signale 52 und 54 in Echtzeit kann beispielsweise ein Vektorsignalprozessor verwendet werden, der eine ausreichende Rechenleistung zur Durchführung der aufwendigen numerischen Operationen zur Verfügung stellt.

Neben diesen aufwendigeren Methoden der Signalauswertung kann jedoch selbstverständlich auch lediglich eine schmalbandige Filterung des Sensorsignals 54 durch die Auswerteeinrichtung 18 erfolgen. Die Mittenfrequenz des Filters muß hierbei im wesentlichen der Grundfrequenz oder einer Oberwellenfrequenz des Wechsel- oder Impulsmagnetfeldes entsprechen. Eine Bestimmung des Ortes ist dann jedoch nicht in der vorstehend beschriebenen Weise möglich. Hierzu muß dann z.B. die Bewegung des Sensors zusätzlich erfaßt werden.

Diese Verfahren zur Signalauswertung lassen sich analog für jede oben beschriebene Anordnung von Sendespule(n) und Sensor(en) übertragen, wobei diese Verfahren nicht an die Anordnung der Sensoren in einem Sensorkanal gebunden sind, sondern vielmehr unabhängig davon auch in solchen Fällen einsetzbar sind, in denen das zu überwachende Bauteil bzw. dessen Ummantelung oder Hülle von außen zugänglich ist, so daß ein Sensor achsparallel am äußeren Umfang der Ummantelung oder der Hülle entlang bewegt werden kann.

## Patentansprüche

1. Überwachungsvorrichtung für Bauelemente (1), insbesondere für Zugglieder von Erd- oder Felsankern, Druckglieder von Pfählen, Spannglieder für Spannbetonbauwerke und Brückenseilen,
mit wenigstens einem Sensor (16), dessen Signal einer Auswerteeinrichtung (18) zugeführt ist,
**dadurch gekennzeichnet,**
daß der wenigstens eine Sensor (16) verschiebbar oder raumfest, aber lösbar in einem dem Bauelement zugeordneten Sensorkanal (15) aufgenommen ist und
daß der wenigstens eine Sensor (16) und die Auswerteeinrichtung (18) für das Signal des wenigstens einen Sensors (16) zur Ermittlung des Vorliegens von Korrosion, Rissen, Lastüberschreitungen, Überdehnungen und Spannungs-Relaxationen wenigstens eines einzelnen Elements (2) des Bauelements (1) ausgestattet sind.

2. Vorrichtung nach Anspruch 1, dadurch gekennzeichnet, daß mehrere Sensorkanäle (15) mit jeweils zumindest einem Sensor (16) vorhanden sind.

3. Vorrichtung nach Anspruch 1 oder 2, dadurch gekennzeichnet, daß einzelnen Elementen (2) des Bauelements (1) jeweils ein Sensorkanal( 15) für einen Sensor (16) zugeordnet ist.

4. Vorrichtung nach einem der vorhergehenden Ansprüche, dadurch gekennzeichnet, daß jeder Sensorkanal (15) für einen Sensor (16) durch eine Bohrung, ein Loch oder ein Rohr gebildet ist, welches im wesentlichen parallel zu dem Bauelement (1) verläuft.

5. Vorrichtung nach Anspruch 4, dadurch gekennzeichnet, daß jeder Sensorkanal (15) mit seiner Innenwandung eine Führung für einen Sensor (16) bildet.

6. Vorrichtung nach Anspruch 4, dadurch gekennzeichnet, daß die Innenwandung jedes einen Sensorkanal (15) bildenden Rohres mit Gewindegängen versehen ist.

7. Vorrichtung nach einem der vorhergehenden Ansprüche, dadurch gekennzeichnet, daß für jeden Sensor (16) eine Bewegungsvorrichtung (17) vorhanden ist.

8. Vorrichtung nach Anspruch 7, dadurch gekennzeichnet, daß jedes einen Sensorkanal (15) bildende Rohr U-förmig verlaufend angeordnet ist, wobei die beiden Schenkel (27) an ihren grundseitigen Enden (28) über einen Rohrbogen (28) verbunden und ihre luftseitigen Enden über den Ankerkopf (4) nach außen geführt sind, wobei im Inneren des Rohres ein Endloselement (29) geführt und über eine angetriebene Umlenkrolle (31) von einem Motor angetrieben ist.

9. Vorrichtung nach Anspruch 7, dadurch gekennzeichnet, daß das einen Sensorkanal (15) bildende Rohr des Sensorkanals (15) an der Innenwandung Gewindegänge (33) aufweist, daß der Sensor (35) außen Gewindegänge (34) besitzt und mittels einer Spindel (36), auf der der Sensor schiebbar, aber mitdrehbar sitzt, durch einen außerhalb des Ankerkopfes (4) angeordneten Motor (39) antreibbar ist.

10. Vorrichtung nach einem der vorhergehenden Ansprüche, dadurch gekennzeichnet, daß der Datenspeicher der Auswerteeinrichtung (18) mit dem zumindest einen Sensor (16) fest verbunden ist.

11. Vorrichtung nach einem der vorstehenden Ansprüche, dadurch gekennzeichnet, daß zumindest eine Sendespule (21, 24) zur Erzeugung eines Magnetfeldes für zumindest einen Magnetfeldsensor vorhanden ist.

12. Vorrichtung nach Anspruch 11, dadurch gekennzeichnet, daß die zumindest eine Sendespule (21, 24) getrennt vom Sensorkopf an einem Ende des zu überwachenden Bauelements (1) angeordnet ist.

13. Vorrichtung nach Anspruch 11, dadurch gekennzeichnet, daß ein oder mehrere Sendespulen (21, 24) vorauseilend am Sensor (16) befestigt sind.

14. Vorrichtung nach Anspruch 11 oder 13, dadurch gekennzeichnet, daß die Sendespulen (21, 24) für sich oder zusammen mit dem Sensor (16) im Sensorkanal (15) bewegbar sind.

15. Vorrichtung nach einem der Ansprüche 11 bis 13, dadurch gekennzeichnet, daß die zumindest eine Sendespule (21, 24) zur Erzeugung eines Wechsel- oder Impulsmagnetfeldes mit einer Sendeeinheit (50) verbunden ist.

16. Vorrichtung nach Anspruch 15, dadurch gekennzeichnet, daß die Auswerteeinrichtung (18) eine Filtereinheit aufweist, dessen Mittenfrequenz im wesentlichen der Grundfrequenz oder einer Oberwellenfrequenz des Wechsel- oder Impulsmagnetfeldes entspricht.

17. Vorrichtung nach Anspruch 15, dadurch gekennzeichnet, daß die Sendeeinheit (50) ein dem erzeugten Magnetfeld entsprechendes Referenzsignal (52) der Auswerteeinrichtung (18) zuführt und daß die Auswerteeinrichtung (18) einen Lockin-Verstärker oder Korrelator aufweist.

18. Vorrichtung nach einem der Ansprüche 11 bis 17, dadurch gekennzeichnet, daß der zumindest eine Sensor (16) als Induktionsspule oder supraleitendes Quanteninterferometer (SQUID) ausgebildet ist, wobei die radiale oder axiale Komponente des Impuls- oder Wechselfeldes oder deren Gradienten gemessen wird.

19. Vorrichtung nach einem der Ansprüche 11 bis 18, dadurch gekennzeichnet, daß zumindest zwei einzelne Elemente (2) des zu überwachenden Bauelements (1) an einem oder beiden Enden magnetisch kurzgeschlossen sind.

20. Vorrichtung nach einem der Ansprüche 11 bis 19, dadurch gekennzeichnet, daß mehrere Sendespulen(21, 24) vorhanden sind und daß jede Sendespule ein Wechselmagnetfeld mit unterschiedlicher Frequenz erzeugt.

## Claims

1. Monitoring apparatus for structural elements (1), in particular for tensioning devices of earth or rock anchors, pressure devices for piles, tensioning devices for prestressed concrete structures and bridge cables,
having at least one sensor (16) whose signal is supplied to an evaluation device (18),
characterized
in that the at least one sensor (16) is held such that it can be displaced or is in a fixed position but is detachable in a sensor channel (15) which is assigned to the structural element, and
in that the at least one sensor (16) and the evaluation device (18) for the signal from the at least one sensor (16) are equipped to determine the presence of corrosion, cracks, excess loads, overexpansion and stress relaxations of at least one individual element (2) of the structural element (1).

2. Apparatus according to Claim 1, characterized in that there are a plurality of sensor channels (15), each having at least one sensor (16).

3. Apparatus according to Claim 1 or 2, characterized in that individual elements (2) of the structural element (1) are assigned in each case one sensor channel (15) for a sensor (16).

4. Apparatus according to one of the preceding claims, characterized in that each sensor channel (15) for a sensor (16) is formed by a drilled hole, a hole or a tube, which runs essentially parallel to the structural element (1).

5. Apparatus according to Claim 4, characterized in that the inner wall of each sensor channel (15) forms a guide for a sensor (16).

6. Apparatus according to Claim 4, characterized in that the inner wall of each tube which forms a sensor channel (15) is provided with threads.

7. Apparatus according to one of the preceding claims, characterized in that a movement apparatus (17) is provided for each sensor (16).

8. Apparatus according to Claim 7, characterized in that each tube which forms a sensor channel (15) is arranged running in a U-shape, the two limbs (27) being connected via a tube bend (28) at their bottom ends (28), and their open-air ends being routed to the outside via the anchor head (4), an endless element (29) being guided in the interior of the tube and being driven by a motor via a driven guide roller (31).

9. Apparatus according to Claim 7, characterized in that the tube, which forms a sensor channel (15), of the sensor channel (15) has threads (33) on the inner wall, in that the sensor (35) has threads (34) on the outside and can be driven by a motor (39), which is arranged outside the anchor head (4), by means of a spindle (36) on which the sensor is seated but can be pushed such that it rotates with it.

10. Apparatus according to one of the preceding claims, characterized in that the data store of the evaluation device (18) is permanently connected to the at least one sensor (16).

11. Apparatus according to one of the above claims, characrerized in that at least one transmitting coil (21, 24) is provided in order to produce a magnetic field for at least one magnetic field sensor.

12. Apparatus according to Claim 11, characterized in that the at least one transmitting coil (21, 24) is arranged separately from the sensor head at one end of the structural element (1) to be monitored.

13. Apparatus according to Claim 11, characterized in that one or more transmitting coils (21, 24) are mounted in a projecting manner on the sensor (16).

14. Apparatus according to Claim 11 or 13, characterized in that the transmitting coils (21, 24) can be moved on their own or together with the sensor (16) in the sensor channel (15).

15. Apparatus according to one of Claims 11 to 13, characterized in that the at least one transmitting coil (21, 24) is connected to a transmitting unit (50) in order to produce an alternating or pulsed magnetic field.

16. Apparatus according to Claim 15, characterized in that the evaluation device (18) has a filter unit whose mid-frequency corresponds essentially to the fundamental frequency or a harmonic frequency of the alternating or pulsed magnetic field.

17. Apparatus according to Claim 15, characterized in that the transmitting unit (50) supplies a reference signal (52), which corresponds to the reduced magnetic field, to the evaluation device, and in that the evaluation device (18) has a lock-in amplifier or correlator.

18. Apparatus according to one of Claims 11 to 17, characterized in that the at least one sensor (16) is designed as an induction coil or a superconductive quantum interferometer (SQUID), the radial or axial component of the pulsed or alternating field or its gradient being measured.

19. Apparatus according to one of Claims 11 to 18, characterized in that at least two individual elements (z) of the structural element (1) to be monitored are magnetically short-circuited at one or both ends.

20. Apparatus according to one of Claims 11 to 19, characterized in that a plurality of transmitting coils (21, 24) are provided, and in that each transmitting coil produces an alternating magnetic field at a different frequency.

## Revendications

1. Dispositif de surveillance pour des éléments de construction (1), notamment des éléments de traction de tirants de roche ou de tirants d'ancrage, des éléments de compression de poteaux, des membres de précontrainte pour des constructions en béton précontraint et pour des cordes de pont, comprenant au moins un capteur (16) dont le signal est amené à un dispositif d'exploitation (18), caractérisé en ce que ledit au moins un capteur (16) est reçu de façon coulissante ou stabilisée, mais de façon à pouvoir être libéré, dans un canal (15) de capteur associé à l'élément de construction et en ce que ledit au moins un capteur (16) et le dispositif d'exploitation (18) pour le signal venant dudit au moins un capteur (16) sont équipés pour la détermination de la présence d'une corrosion, de fissures, de dépassements de charge, de surtensions et de relaxations de tension d'au moins un élément (2) individuel de l'élément de construction (1).

2. Dispositif selon la revendication 1, caractérisé en ce que plusieurs canaux (15) de capteur comprenant respectivement au moins un capteur (16) sont prévus.

3. Dispositif selon la revendication 1 ou 2, caractérisé en ce que respectivement un canal (15) de capteur pour un capteur (16) est associé à des éléments individuels (2) de l'élément de construction (1).

4. Dispositif selon l'une quelconque des revendications précédentes caractérisé en ce que chaque canal (15) de capteur pour un capteur (16) est formé par un perçage, un trou ou un tube qui s'étend essentiellement parallèle à l'élément de construction (1).

5. Dispositif selon la revendication 4, caractérisé en ce que chaque canal (15) de capteur forme avec sa paroi interne un guidage pour le capteur (16).

6. Dispositif selon la revendication 4, caractérisé en ce que la paroi interne de chaque tube formant un canal (15) de capteur est muni de pas de filetage.

7. Dispositif selon l'une quelconque des revendications précédentes, caractérisé en ce que pour chaque capteur (16) est prévu un dispositif (17) de déplacement.

8. Dispositif selon la revendication 7, caractérisé en ce que chaque tube formant un canal (15) de capteur est agencé de façon à s'étendre en forme de U, les deux branches (27) étant reliées à leurs extrémités (28) de base par l'intermédiaire d'un arc de tube (28) et les extrémités côtés air étant guidées vers l'extérieur par l'intermédiaire de la tête d'ancrage (4), un élément sans fin (29) étant guidé à l'intérieur du tube et étant entraîné par un moteur au moyen d'une poulie de renvoi (31) entraînée.

9. Dispositif selon la revendication 7, caractérisé en ce que le tube formant un canal (15) de capteur du canal de capteur (15) présente à sa paroi interne des pas de filetage (33), en ce que le capteur (35) possède à l'extérieur des pas de filetage (34) et peut être entraîné au moyen d'une tige filetée (36) sur laquelle le capteur est disposé de façon coulissante mais tournant avec la tige, par l'intermédiaire d'un moteur (39) agencé à l'extérieur de la tête d'ancrage (4).

10. Dispositif selon l'une quelconque des revendications précédentes, caractérisé en ce que la mémoire de données du dispositif d'exploitation (18) est reliée de façon fixe à au moins un capteur (16).

11. Dispositif selon l'une quelconque des revendications précédentes, caractérisé en ce qu'au moins une bobine d'émission (21, 24) pour la génération d'un champ magnétique pour au moins un capteur de champ magnétique est prévue.

12. Dispositif selon la revendication 11, caractérisé en ce que la au moins une bobine d'émission (21, 24) est agencée de façon séparée de la tête de capteur à une extrémité de l'élément de construction (1) à surveiller.

13. Dispositif selon la revendication 11, caractérisé en ce qu'une ou plusieurs bobines d'émission (21, 24) sont fixées au capteur (16) de façon à devancer celui-ci.

14. Dispositif selon la revendication 11 ou 13, caractérisé en ce que les bobines d'émission (21, 24) sont mobiles individuellement ou en commun avec le capteur (16) dans le canal (15) de capteur.

15. Dispositif selon l'une quelconque des revendications 11 à 13, caractérisé en ce qu'au moins une bobine d'émission (21, 24) pour la génération d'un champ magnétique alternatif ou à impulsions est reliée à une unité d'émission (50).

16. Dispositif selon la revendication 15, caractérisé en ce que le dispositif d'exploitation (18) présente une unité de filtre dont la fréquence centrale correspond essentiellement à la fréquence de base ou à une harmonique du champ magnétique alternatif ou à impulsions.

17. Dispositif selon la revendication 15, caractérisé en ce que l'unité d'émission (50) amène au dispositif d'exploitation (18) un signal de référence (52) correspondant au champ magnétique généré et en ce que le dispositif d'exploitation (18) présente un amplificateur à détection de phase ou un corrélateur.

18. Dispositif selon l'une quelconque des revendications 11 à 17, caractérisé en ce que ledit au moins un capteur (16) est réalisé sous la forme d'une bobine d'induction ou d'un interféromètre quantique supraconducteur (SQUID), les composantes radiales ou axiales du champ à impulsion ou alternatif ou leurs gradients étant mesurées.

19. Dispositif selon l'une quelconque des revendications 11 à 18, caractérisé en ce qu'au moins deux éléments (2) individuels de l'élément de construction (1) à surveiller sont court-circuités magnétiquement à un ou aux deux extrémités.

20. Dispositif selon l'une quelconque des revendications 11 à 19, caractérisé en ce que plusieurs bobines d'émission (21, 24) étant prévues et en ce que chaque bobine d'émission génère un champ magnétique alternatif de fréquence différente.
